# EUROPÄISCHE PATENTSCHRIFT

(11) **EP 2 532 394 B1**
(45) Veröffentlichungstag und Bekanntmachung des Hinweises auf die Patenterteilung: **26.12.2018**
(21) Anmeldenummer: 12170909.1
(22) Anmeldetag: 05.06.2012
(51) Int. Cl.: A63B 29/02, F16B 45/02, A62B 35/00

(54) **Karabiner, insbesondere Klettersteigkarabiner**
Karabiner, in particular climbing karabiner
Mousqueton, notamment mousqueton de via ferrata

(30) Priorität: 10.06.2011 DE 102011077430
(43) Veröffentlichungstag der Anmeldung: 12.12.2012
(73) Patentinhaber: Oberalp Deutschland GmbH, 85609 Aschheim (DE)
(72) Erfinder: Baumgartner, Peter, 81243 Aschheim (DE)
(74) Vertreter: Weickmann & Weickmann PartmbB

(56) Entgegenhaltungen:
- AU-A4- 2009 100 587
- FR-A1- 2 805 577
- JP-A- 2007 117 573
- US-A1- 2008 185 848

## Beschreibung

Die vorliegende Erfindung betrifft einen Karabiner, welcher einen Hauptbügel und einen schwenkbar zu diesem gehaltenen Schließhebel umfasst, wobei der Schließhebel in einer geschlossenen Stellung des Karabiners eine Öffnung des Hauptbügels schließt und in einer geöffneten Stellung des Karabiners zu einem Innenbereich des Karabiners hin verschwenkt ist, um die Öffnung des Hauptbügels zu öffnen. Aspekte der Erfindung betreffen insbesondere einen Klettersteigkarabiner, der ferner einen Sicherungshebel umfasst, welcher schwenkbar zum Hauptbügel gehalten ist, wobei der Sicherungshebel an einem Schwenkpunkt verschwenkbar ist zwischen einer Sicherungsstellung, in der er eine Schwenkbewegung des Schließhebels von der geschlossenen Stellung in die geöffnete Stellung blockiert, und einer Freigabestellung, in der er eine Schwenkbewegung des Schließhebels von der geschlossenen Stellung in die geöffnete Stellung zulässt.

Karabiner finden als Kopplungselement zur manuellen Herstellung oder Lösung einer Kopplung zwischen zwei Teilen breite Anwendung, insbesondere als Sicherungselement im Bergsport. Mit Karabinern lassen sich zwei oder mehr Sicherungsmittel, wie Seile, Gurte, Schlaufen, Haken, Karabiner, Ösen, Abseilvorrichtungen, sonstige Bergsteigerausrüstung oder alpines Gerät oder dergleichen, mit einer einfachen Handbewegung miteinander verbinden bzw. voneinander lösen. Zumeist ist der Schließhebel in die Schließstellung vorgespannt oder/und mit dem zusätzlichen Sicherungshebel gesichert, um ein unbeabsichtigtes Öffnen des Schließhebels und damit unbeabsichtigtes Entkoppeln der Sicherungsmittel zuverlässig zu verhindern.

Klettersteigkarabiner werden zum Sichern des Bergsteigers an einem Klettersteig verwendet, an welchem bergseitige Sicherungsmittel entlang des Klettersteigs am Felsen befestigt sind, z.B. ein fortlaufendes Sicherungsseil. Der Bergsteiger verwendet hier zumeist zwei Karabiner, welche jeweils mittels eines Gurts an einem Hüftgurt des Bergsteigers gekoppelt sind. Bei der Fortbewegung entlang des Klettersteigs muss der Bergsteiger dann die Klettersteigkarabiner wiederholt mit den bergseitigen Sicherungsmitteln koppeln oder von diesen entkoppeln, wobei stets mindestens einer der beiden Karabinern mit den bergseitigen Sicherungsmitteln gekoppelt sein muss.
Die EP 1 927 767 A1 beschreibt einen Karabiner der vorstehend genannten Art, welcher insbesondere für den Einsatz am Klettersteig geeignet ist. Bei diesem Karabiner wird der Innenbereich des Karabiners durch den Hauptbügel und den Schließhebel begrenzt, wobei der Schließhebel auf einer Seite des Innenbereichs angeordnet ist und auf der gegenüberliegenden Seite ein Sicherungshebel schwenkbar am Hauptbügel gelagert ist. Damit kann der Karabiner in einer Hand des Bergsteigers gehalten werden, so dass der Sicherungshebel am Daumen bzw. in der Handfläche des Benutzers anliegt und der Schließhebel von einem oder mehreren Fingern des Benutzers umgriffen werden kann. Zum Öffnen des Karabiners kann dann mit nur einer Hand der Sicherungshebel in die Freigabestellung verschwenkt werden und der Schließhebel in die geöffnete Stellung verschwenkt werden. Auf diese Weise lässt sich der Karabiner schnell öffnen, wobei durch die Notwendigkeit zweier unterschiedlicher Hebelbewegungen zum Öffnen des Karabiners ein unbeabsichtigtes Öffnen des Karabiners verhindert werden kann.
JP2007117573 offenbart einen Karabiner mit Hauptbügel, Schließhebel, Sicherungshebel und Gurtöffnung. Der Schließhebel hat eine Länge, die es ermöglicht, alle vier Finger gleichzeitig zu benutzen, wobei sich die Finger aber trotzdem weit weg von dem Öffnungsabschnitt befinden. Trotz des prinzipiell einfachen Funktionsprinzips bekannter Klettersteigkarabiner ist deren Handhabung im praktischen Einsatz noch mit Nachteilen verbunden, die sich insbesondere bei häufigen Öffnungs- und Schließbewegungen, bei schwierigen Witterungsverhältnissen oder bei weniger erfahrenen Bergsteigern zeigen. So ist etwa zum Öffnen des Karabiners eine relativ hohe Druckkraft auf den Schließhebel auszuüben, und zwar während des gesamten Schwenkwegs des Schließhebels.

Um die vom Finger des Benutzers aufzuwendende Kraft zu verringern, kann der Schließhebel nahe seines freien Endes betätigt werden. An diesem freien Ende kontaktiert der Schließhebel jedoch auch den Hauptbügel des Karabiners, sodass die Gefahr besteht, dass der Finger des Benutzers beim Öffnen und Schließen mit dem Hauptbügel kollidiert und sich der Benutzer insbesondere beim Schließen des Karabiners den Finger einklemmt.
Abhängig vom Schwenkwinkel des Schließhebels liegt der Karabiner zudem unterschiedlich gut in der Hand. Während der Karabiner in der geschlossenen Stellung tendenziell nach oben aus der Hand rutscht, gleiten die am Schließhebel anliegenden Finger in der geöffneten Stellung tendenziell in den Innenbereich des Karabiners und über das freie Ende des Schließhebels hinweg. Ferner wurde festgestellt, dass beim Auskopplungsvorgang das Sicherungsmittel auf seinem Weg vom Innenbereich des Karabiners durch die Öffnung des Hauptbügels mit einem Finger des Bergsteigers, der den Schließhebel in der geöffneten Stellung hält, kollidiert. Nach einer hohen Anzahl von Auskopplungsvorgängen kann dies als unangenehm empfunden werden oder gar zu Verletzungen führen, insbesondere wenn das Sicherungsmittel ein Stahlseil eines Klettersteigs ist.

Vor diesem Hintergrund ist es Aufgabe der vorliegenden Erfindung, einen Karabiner, insbesondere einen Klettersteigkarabiner der vorstehend genannten Art, bereitzustellen, welcher einfacher und komfortabler zu handhaben ist und insbesondere auch nach einer hohen Anzahl von Ein- und Auskopplungsvorgängen noch zufriedenstellende Handhabungseigenschaften zeigt.
Erfindungsgemäß wird zur Lösung dieser Aufgabe ein Karabiner bereitgestellt, welcher einen Hauptbügel und einen schwenkbar zu diesem gehaltenen Schließhebel umfasst, wobei der Schließhebel in einer geschlossenen Stellung des Karabiners eine Öffnung des Hauptbügels schließt und in einer geöffneten Stellung des Karabiners zu einem Innenbereich des Karabiners hin verschwenkt ist, um die Öffnung des Hauptbügels zu öffnen,wobei eine Gurtöffnung zur Aufnahme eines Gurts separat von dem Innenbereich des Karabiners ausgebildet ist, und wobei in Richtung einer Hauptzugachse des Karabiners die Gurtöffnung zwischen dem Schwenkpunkt des Schließhebels und dem Innenbereich des Karabiners oder an gleicher axialer Position wie der Schwenkpunkt des Schließhebels angeordnet ist, wobei eine Länge des Schließhebels größer ist als 85 mm, bevorzugt größer ist als 100 mm, und wobei der Schließhebel in Richtung der Hauptzugachse zwischen dem Schwenkpunkt und einem freien Ende des Schließhebels in einen unteren Abschnitt, der einen Griffabschnitt bildet, und einen oberen Abschnitt, der einen Öffnungsabschnitt bildet, unterteilt ist, und wobei in Richtung der Hauptzugachse der Griffabschnitt zwischen dem Öffnungsabschnitt und dem Schwenkpunkt liegt und der Öffnungsabschnitt zwischen dem freien Ende des Schließhebels und dem Griffabschnitt liegt.

Ein wesentliches Merkmal der vorliegenden Erfindung liegt somit in der deutlichen Verlängerung des Schließhebels gegenüber Karabinern des Stands der Technik. Bei herkömmlichen Karabinern richtet sich die Länge des Schließhebels nach der Maßgabe, dem Finger eines Benutzers ausreichend Platz zu geben, um den Schließhebel bequem öffnen zu können. Dementsprechend ist die Länge des Schließhebels herkömmlicher Karabiner für einen, zwei oder drei Finger ausgelegt und liegt somit etwa zwischen 40 mm (für die Betätigung mit zwei Fingern) und 70 mm (für die Betätigung mit drei Fingern). Der Griffabschnitt herkömmlicher Karabiner erstreckt sich dabei im Wesentlichen über die gesamte Länge des Schließhebels.
Durch die Bereitstellung des verlängerten Schließhebels gemäß der vorliegenden Erfindung erhält der Schließhebel zusätzlich zu dem als Griffabschnitt benötigten Längenabschnitt einen weiteren signifikanten Längenabschnitt, an welchem die Finger des Benutzers bei der Betätigung des Karabiners nicht anliegen. Der Benutzer erhält daher die Möglichkeit, den Schließhebel so zu greifen, dass sich die Finger im signifikanten Abstand vom freien Ende des Schließhebels befinden, sodass eine Kollision der Finger mit dem Hauptbügel beim Öffnen und Schließen des Karabiners sowie ein Einklemmen der Finger in der Karabineröffnung verhindert werden kann.
Die erfindungsgemäße Verlängerung des Schließhebels ist somit keineswegs eine willkürliche Änderung einer Abmessung eines an sich bekannten Karabiners, sondern entspricht der Bereitstellung eines zusätzlichen funktionalen Abschnitts am Karabiner, welcher in herkömmlichen Karabinern nicht vorhanden war. Der erfindungsgemäß geschaffene freie Längsabschnitt des Schließhebels zwischen einem Griffabschnitt für die Finger des Benutzers und dem freien Ende des Schließhebels erlaubt bzw. erzwingt einen Sicherheitsabstand zwischen den Fingern des Benutzers und dem Kontaktpunkt zwischen dem freien Ende des Schließhebels und dem Hauptbügel. Gleichermaßen werden die Finger des Benutzers auch in der geöffneten Stellung des Karabiners im Abstand vom Innenraum des Karabiners und damit im Abstand von einem im Karabiner gehaltenen Sicherungsmittel gehalten, sodass bei wiederholter Betätigung des Karabiners auch eine Kollision mit dem Sicherungsmittel (z.B. Stahlseil) vermieden werden kann.
Zur Erzielung der oben genannten vorteilhaften Wirkungen der Erfindung wird eine Länge des Schließhebels von mindestens 85 mm vorgeschlagen. Beträgt die Länge mehr als ungefähr 85 mm, so kann zwischen den Fingern des Benutzers und dem freien Ende des Schließhebels ein solcher Abstand eingehalten werden, dass auch dann, wenn die Finger des Benutzers während des vollständigen Öffnens des Karabiners etwas am Schließhebel verrutschen, noch immer ausreichend Abstand vom Hauptbügel bzw. vom Innenraum des Karabiners sichergestellt werden kann. Zudem erlaubt ein Schließhebel mit einer Mindestlänge von 85 mm die zuverlässige Bedienung mit Handschuhen, insbesondere ohne ein Einklemmen des Handschuhs zwischen Schließhebel und Hauptbügel beim Schließen des Karabiners. Optimale Funktionalität und Handhabung ergibt sich bei einer Länge des Schließhebels von mehr als ungefähr 100 mm. Der Schließhebel kann gleichzeitig von mehreren Fingern sowie mit Handschuhen betätigt werden, ohne dass die Hand bzw. der Handschuh in der Karabineröffnung eingeklemmt wird oder mit einem im Karabiner eingehängten Sicherungsmittel kollidiert. Gleichzeitig ist die Länge des Sicherungshebels vorzugsweise nicht größer als ungefähr 130 mm, da sich bei Karabinern mit längeren Schließhebeln die Gewichtszunahme deutlicher bemerkbar machen würde und die Handhabung beeinträchtigt wäre.

Es wurde bereits angesprochen, dass der Schließhebel des erfindungsgemäßen Karabiners vorteilhaft einen Griffabschnitt für mindestens einen Finger des Benutzers aufweisen kann, sodass die Position der Finger des Benutzers vorgegeben ist und dementsprechend der erfindungsgemäße Abstand zwischen den Fingern und dem freien Ende des Schließhebels sichergestellt werden kann. Vorzugsweise ist dabei die Länge des Griffabschnitts größer als ungefähr 30 mm, sodass gleichzeitig mindestens zwei Finger des Benutzers an diesem Platz finden und der Schließhebel komfortabel betätigt werden kann. Beträgt die Länge des Griffabschnitts mehr als ungefähr 45 mm, so ist der Karabiner auch für die Betätigung mit mindestens drei Fingern ausgelegt und bietet für den größten Teil der Benutzer komfortable Möglichkeiten zum Ergreifen und Betätigen des Schließhebels. Besonders bevorzugt beträgt die Länge des Griffabschnitts mehr als ungefähr 50 mm, sodass dem Benutzer ein Maximum an Freiheit für die Betätigung des Schließhebels mit einem, zwei, drei oder gar vier Fingern bereitgestellt wird, während gleichzeitig die verbleibende Länge des Schließhebels als freier Längenabschnitt einen ausreichenden Abstand zwischen den Fingern des Benutzers und dem Hauptbügel bzw. dem Innenraum des Karabiners sicherstellt.

In einer bevorzugten Ausführungsform der Erfindung ist vorgesehen, dass der Schließhebel einen ersten Griffabschnitt aufweist und der Karabiner einen dem ersten Griffabschnitt abgewandten, zweiten Griffabschnitt aufweist, so dass zum Öffnen des Karabiners der erste und der zweite Griffabschnitt im Wesentlichen aufeinander zu bewegbar sind, wobei ein Abstand zwischen dem ersten Griffabschnitt und dem zweiten Griffabschnitt zwischen ungefähr 35 mm und ungefähr 70 mm, vorzugsweise zwischen ungefähr 40 mm und ungefähr 60 mm, liegt. Ergonomische Untersuchungen auf Grundlage der Anatomie einer menschlichen Hand haben gezeigt, dass bei einem Griffabstand von weniger als ungefähr 35 mm die von der Hand auf die Griffabschnitte übertragbare Kraft deutlich reduziert ist. Gleichzeitig haben die meisten Benutzer bei einem Griffabstand von mehr ungefähr 70 mm Probleme, die beiden Griffabschnitte ausreichend weit zu umgreifen, um Druckkraft effektiv übertragen zu können. Ferner haben Untersuchungen zur Häufigkeitsverteilung bestimmter Handabmessungen unter der Bevölkerung zu dem Ergebnis geführt, dass eine besonders vorteilhafte Kraftübertragung von der Hand auf den Karabiner für einen ganz überwiegenden Anteil der Bevölkerung durch einen Abstand der Griffabschnitte im Bereich zwischen ungefähr 40 mm und ungefähr 60 mm erzielt werden kann.

In einer weiteren bevorzugten Ausführungsform der vorliegenden Erfindung kann alternativ oder zusätzlich vorgesehen sein, dass der Schließhebel einen ersten Griffabschnitt aufweist und der Karabiner einen dem ersten Griffabschnitt abgewandten, zweiten Griffabschnitt aufweist, so dass zum Öffnen des Karabiners der erste und der zweite Griffabschnitt im Wesentlichen aufeinander zu bewegbar sind, wobei der erste Griffabschnitt oder/und der zweite Griffabschnitt entlang seiner Längserstreckung eine Krümmung mit einem Krümmungsradius zwischen ungefähr 180 mm und ungefähr 260 mm, vorzugsweise zwischen ungefähr 210 mm und ungefähr 230 mm aufweist. Auch die in dieser Ausführungsform vorgeschlagenen Krümmungsradien für den ersten oder/und den zweiten Griffabschnitt gehen zurück auf ergonomische Untersuchungen ausgehend von der Anatomie und Physiologie der menschlichen Hand, betrachtet in dem Zustand, in welchem die Hand einen Karabiner bestimmungsgemäß ergreift und betätigt. Liegen die Krümmungsradien zwischen ungefähr 180 mm und ungefähr 260 mm, so ergibt sich eine verbesserte Kraftübertragung auf die Griffabschnitte sowie eine bequemere Handhabung. Die besten Ergebnisse wurden mit Krümmungsradien zwischen ungefähr 210 mm und ungefähr 230 mm (insbesondere 220 mm) erreicht; diese Radien entsprechen der Handform des überwiegenden Anteils der Bevölkerung.

Gemäß einer weiteren bevorzugten Ausführungsform kann der Schließhebel eine Fingerbarriere aufweisen, welche dafür ausgelegt ist, ein Abgleiten des Fingers zu einem freien Ende des Schließhebels hin zu verhindern. Somit ist auf einer Seite der Fingerbarriere auch ein Griffabschnitt definiert, und die Fingerbarriere befindet sich zwischen dem Griffabschnitt und dem freien Ende des Schließhebels. Auf diese Weise werden einerseits die Finger des Benutzers sicher am Griffabschnitt gehalten, sodass diese nicht zum Kontaktabschnitt zwischen Schließhebel und Hauptbügel hin oder - bei geöffnetem Schließhebel - in den Innenbereich des Karabiners abrutschen können. Andererseits stellt die Fingerbarriere beim Auskoppeln eines im Karabiner gehaltenen Sicherungsmittels (z.B. Stahlseil) eine Abschirmung oder einen Schutz der Finger vor einer Kollision mit dem austretenden Sicherungsmittel bereit. Somit liegt der Karabiner auch in der geöffneten Stellung und bei Ausübung eines hohen Drucks auf den Schließhebel sicher in der Hand und die Finger des Bergsteigers werden beim Auskoppeln des Sicherungsmittels geschützt. Auch nach häufigem Ein- und Auskopplungsvorgängen, bei schwierigen Witterungsverhältnissen oder bei Verwendung durch weniger erfahrene Bergsteiger ist der Karabinern somit mit hohem Komfort zu handhaben.
In einer weiteren Ausführungsform der vorliegenden Erfindung weist eine Begrenzung des Innenbereichs des Karabiners eine Ausweisungskontur auf, welche ein Sicherungsmittel aus dem Innenbereich über die Fingerbarriere hinweg durch die Öffnung des Karabiners ausweist. Beim Auskoppeln des Sicherungsmittel findet das Sicherungsmittel somit seinen Weg aus dem Innenbereich über die Fingerbarriere hinweg, so dass es einerseits leicht und ohne zu verhaken ausgekoppelt werden kann und andererseits sicher an den Fingern des Bergsteigers vorbei geführt wird, ohne mit diesen wesentlich zu kollidieren.
Vorzugsweise geht die Ausweisungskontur kontinuierlich in einen Vorsprung oder eine Stufe über, welcher/welche die Fingerbarriere bildet. Das Sicherungsmittel kann beim Auskoppeln dann entlang der Ausweisungskontur ohne Störung oder Verhaken über den Vorsprung bzw. die Stufe hinweg gleiten und durch die Öffnung des Karabiners austreten.

In der beanspruchten Ausführungsform umfasst ein Karabiner der Erfindung eine Gurtöffnung zur Aufnahme eines Gurts, welche separat von dem Innenbereich des Karabiners ausgebildet ist, wobei in Bezug auf eine Hauptzugachse des Karabiners die Gurtöffnung zwischen dem Schwenkpunkt des Schließhebels und dem Innenbereich des Karabiners oder an gleicher axialer Position wie der Schwenkpunkt des Schließhebels angeordnet ist. In dieser Ausführungsform ist der Schwenkhebel des Schließhebels relativ weit am unteren Ende des Karabiners angeordnet, indem die Gurtöffnung des Karabiners noch zwischen dem Schwenkpunkt des Schließhebels und dem Innenbereich des Karabiners oder an gleicher axialer Position wie der Schwenkpunkt des Schließhebels angeordnet ist. Somit wird ein großer Teil der Länge des Karabiners entlang der Hauptzugachse durch den Schließhebel eingenommen, sodass die erfindungsgemäße Verlängerung des Schließhebels ohne übermäßige Verlängerung der Gesamtlänge des Karabiners erreicht werden kann.
Zudem kann in dieser Ausführungsform der Schwenkpunkt des Schließhebels in Bezug auf die Hauptachse des Karabiners seitlich neben der Gurtöffnung oder seitlich unterhalb der Gurtöffnung angeordnet sein, was zu einer Verbreiterung des Karabiners am unteren Ende in einer Richtung senkrecht zur Hauptzugachse führt. Damit liegt der Karabiner wesentlich besser in der Hand und insbesondere kann der bei stärker V-förmigen Karabinern des Stands der Technik feststellbaren Tendenz, dass der Karabiner nach oben aus der Hand rutscht (insbesondere bei Kraftausübung zum Öffnen des Karabiners), entgegengewirkt werden.
Die Vorteile der zuletzt genannten Ausführungsform kommen besonders bei einem Klettersteigkarabiner zum Tragen, insbesondere bei einem Karabiner mit einem Sicherungshebel, welcher schwenkbar zum Hauptbügel gehalten ist, wobei der Sicherungshebel an einem Schwenkpunkt verschwenkbar ist zwischen einer Sicherungsstellung, in der er eine Schwenkbewegung des Schließhebels von der geschlossenen Stellung in die geöffnete Stellung blockiert, und einer Freigabestellung, in der er eine Schwenkbewegung des Schließhebels von der geschlossenen Stellung in die geöffnete Stellung zulässt, wobei in Bezug auf die Hauptzugachse des Karabiners die Gurtöffnung zwischen dem Schwenkpunkt des Sicherungshebels und dem Innenbereich des Karabiners oder an gleicher axialer Position wie der Schwenkpunkt des Sicherungshebels angeordnet ist. Sowohl der Schwenkpunkt des Schließhebels als auch der Schwenkpunkt des Sicherungshebels liegen bei dieser Ausführungsform somit in Bezug auf die Hauptzugachse jeweils seitlich auf unterschiedlichen Seiten der Gurtöffnung bzw. seitlich unterhalb der Gurtöffnung, so dass der Sicherungshebel verlängert werden kann und die Breite des Karabiners im unteren Abschnitt vergrößert wird, wodurch der Karabiner besser in der Hand liegt und auch im Dauereinsatz komfortabel und sicher zu bedienen ist.

Jedoch nicht nur die zuletzt genannte Ausführungsform, sondern auch andere Varianten der Erfindung, insbesondere die zuvor beschriebenen Ausführungsformen, finden bei Klettersteigkarabinern mit oben beschriebenem Sicherungshebel besonders vorteilhafte Anwendung. Die in dieser Offenbarung beschriebenen Vorteile und Effekte kommen bei Klettersteigkarabinern besonders zur Geltung, da Klettersteigkarabiner üblicherweise während der Fortbewegung am Klettersteig sehr häufig geschlossen und geöffnet werden müssen und das Sicherungsmittel, insbesondere ein am Fels befestigtes Klettersteigseil, sehr häufig ein- und ausgekoppelt werden muss.

Die Erfindung wird nachfolgend anhand eines bevorzugten Ausführungsbeispiels unter Bezugnahme auf die beigefügten Zeichnungen näher erläutert. Es zeigen:
- Figur 1: eine Seitenansicht eines Klettersteigkarabiners gemäß dem Ausführungsbeispiel der Erfindung in einer geschlossenen Stellung,
- Figur 2: eine Stirnseitenansicht des in Figur 1 gezeigten Klettersteigkarabiners,
- Figur 3: eine Schnittansicht des Klettersteigkarabiners des Ausführungsbeispiels gemäß einer Schnittlinie III-III in Figur 2,
- Figuren 4 bis 6: Ansichten des Klettersteigkarabiners des Ausführungsbeispiels der Erfindung entsprechend den Darstellungen in Figuren 1 bis 3, jedoch für eine geöffnete Stellung des Klettersteigkarabiners.

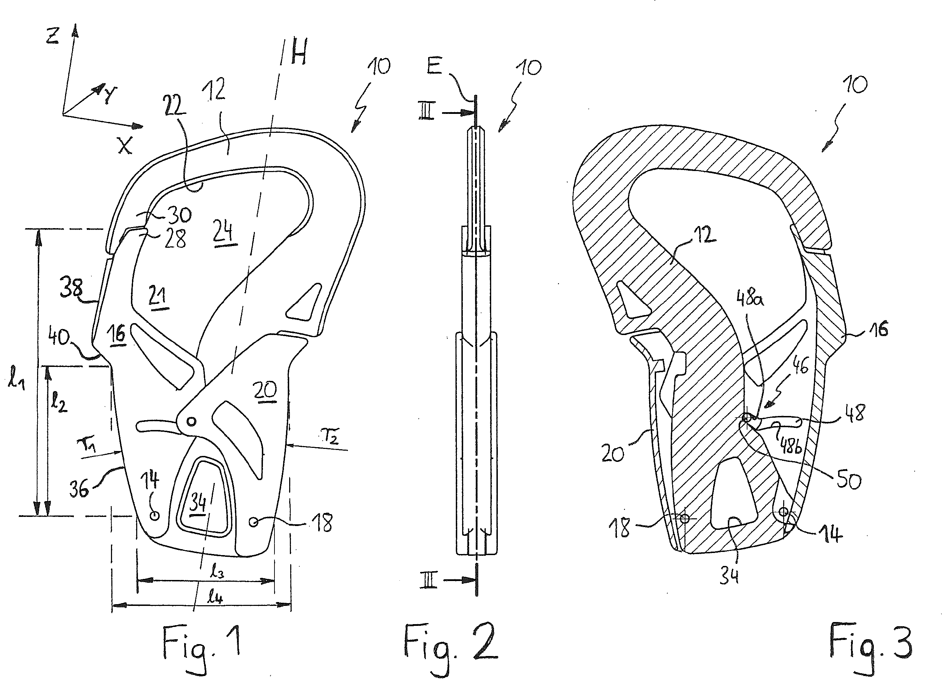

Ein Klettersteigkarabiner 10 des Ausführungsbeispiels der Erfindung umfasst einen Hauptbügel 12, einen an einem Schwenkpunkt 14 schwenkbar gehaltenen Schließhebel 16 und einen an einen Schwenkpunkt 18 schwenkbar gehaltenen Sicherungshebel 20. Der Hauptbügel 12 hat die allgemeine Form eines Hakens mit einer Öffnung 21, so dass er einen Teil einer Begrenzungskontur 22 für einen Innenbereich 24 des Klettersteigkarabiners 10 bildet. Die Begrenzungskontur 22 wird vervollständigt durch eine Innenseite 26 des Schließhebels 16, welcher die Öffnung 21 schließt. In der in Figuren 1a bis 2c gezeigten geschlossenen Stellung des Karabiners 10 ist die innere Begrenzungskontur 22 des Innenbereichs 24 eine im Wesentliche vollständig geschlossene, umlaufende Ringkontur, so dass ein durch den Innenbereich 24 hindurchgeführtes Sicherungsmittel (nicht dargestellt) durch den Karabiner 10 gesichert bzw. eingekoppelt ist.

Durch eine Schließhebelfeder (nicht dargestellt) ist der Schließhebel 16 in die geschlossene Stellung vorgespannt, in welcher ein freies Ende 28 des Schließhebels 16 an einem freien Ende 30 des Hauptbügels 12 anschlägt. Das freie Ende 28 des Schließhebels 16 kann dabei mit dem freien Ende 30 des Hauptbügels 12 formschlüssig in Eingriff treten, um den Klettersteigkarabiner 10 in der geschlossenen Stellung mechanisch zu stabilisieren und insbesondere auf den Hauptbügel 12 einwirkende Zugkräfte auch in den Schließhebel 16 einzuleiten und von diesem aufnehmen zu lassen.

Unterhalb des Innenbereichs 24 weist der Klettersteigkarabiner 10 vorzugsweise eine Gurtöffnung 34 auf, welche für die Durchführung eines Gurts oder Seils oder dergleichen ausgelegt ist, mit dem der Klettersteigkarabiner 10 während der Nutzung dauerhaft verbunden ist. Wie im Ausführungsbeispiel illustriert kann die Gurtöffnung 34 eine von dem Innenbereich 24 separate Öffnung sein, um den durch diese hindurchgeführten Gurt von dem ein- und auszukoppelnden Sicherungsmittel getrennt zu halten, so dass die beiden Sicherungsmittel sich beim Ein- und Auskoppeln nicht gegenseitig behindern.

Von allen Verbindungslinien zwischen einem Punkt im Innenbereich 24 und einem Punkt in der Gurtöffnung 34 definiert die Verbindungslinie mit maximaler Länge eine Hauptzugachse H des Klettersteigkarabiners 10. Entlang dieser Hauptzugachse H verläuft die Zugrichtung oder Kraftrichtung zwischen einem in der Gurtöffnung 34 aufgenommenen Gurt und einem im Innenbereich 24 aufgenommenen Sicherungsmittel, wenn der Gurt und das Sicherungsmittel voneinander weg gezogen werden. In der vorliegenden Offenbarung werden die Richtungsangaben wie "oben" und "unten" in Bezug auf die Hauptzugachse H derart definiert, dass der Innenbereich 24 oberhalb der Gurtöffnung 34 liegt. Ferner liegt die Hauptzugachse H in der Hauptebene E des Klettersteigkarabiners 10, innerhalb welcher auch die Begrenzungskontur 22 des Innenraums 24 verläuft. Eine X-Richtung des Klettersteigkarabiners 10 verläuft orthogonal zur Hauptzugachse H und liegt innerhalb der Hauptebene E, eine Y-Richtung verläuft orthogonal zur X-Richtung und orthogonal zur Hauptebene E und eine Z-Richtung verläuft in Richtung der Hauptzugachse H nach oben.

Der Schließhebel 16 des Ausführungsbeispiels ist in Z-Richtung zwischen dem Schwenkpunkt 14 und dem freien Ende 28 in einen unteren Abschnitt, der einen Griffabschnitt 36 bildet, und einen oberen Abschnitt, der einen Öffnungsabschnitt 38 bildet, unterteilt. In Bezug auf die Z-Richtung liegt der Griffabschnitt 36 zwischen dem Öffnungsabschnitt 38 und dem Schwenkpunkt 14 und der Öffnungsabschnitt 38 liegt zwischen dem freien Ende 28 des Schließhebels und dem Griffabschnitt 36.

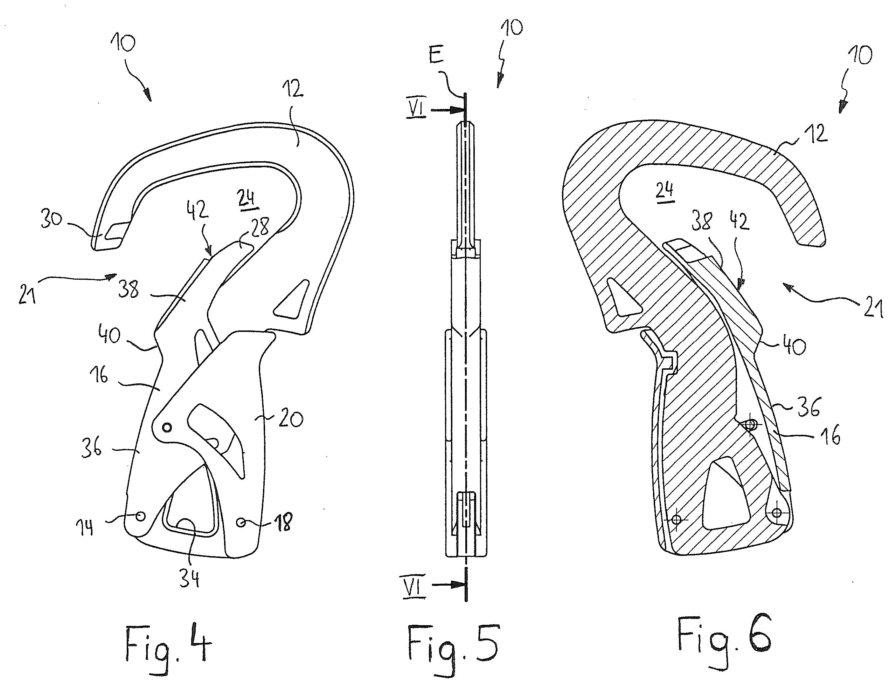

Der Griffabschnitt 36 ist dafür ausgelegt, von den Fingern eines Bergsteigers ergriffen zu werden, um den Schließhebel 16 in die geöffnete Stellung zu verschwenken, während der Öffnungsabschnitt 38 insbesondere in der geöffneten Stellung (Figuren 4 bis 6) näher am Innenbereich 24 des Karabiners 10 liegt und damit in Kontakt mit einem am Karabiner 10 gehaltenen Sicherungsmittel gelangen kann. Durch Bereitstellung des Öffnungsabschnitts 38 kann somit der Schließhebel 16 im sicheren Abstand von der Öffnung 21 des Karabiners 10 betätigt werden.

Am Schließhebel 16 des Ausführungsbeispiels ist ausreichend Platz für die Bereitstellung des Griffabschnitts 36 sowie des Öffnungsabschnitts 38, da eine ungefähr in Z-Richtung gemessene Länge l₁ des Schließhebels 16 deutlich größer ist als in Karabinern des Stands der Technik. Im Ausführungsbeispiel beträgt die Länge l₁ des Schließhebels 16 zwischen dem Schwenkpunkt 14 und dem freien Ende 28 ungefähr 100 mm bis ungefähr 105 mm. Etwa die Hälfte der Länge des Schließhebels 16 kann als Griffabschnitt 36 zur Verfügung stehen, z.B. im vorliegenden Ausführungsbeispiel eine Länge l₂ von ungefähr 50 mm bis ungefähr 55 mm. Diese Abmessungen können selbstverständlich variieren; als vorteilhaft wird ein Verhältnis zwischen l₂ und l₁ in einem Bereich von ungefähr ein Drittel bis ungefähr zwei Drittel angesehen.

Der Griffabschnitt 36 kann zusätzliche ergonomische oder haptische Gestaltung aufweisen, um das Greifen des Schließhebels zu unterstützen, z.B. eine an die Fingerform angepasste Oberflächenkontur, eine spezielle Oberflächenbeschaffenheit oder dergleichen. Im Ausführungsbeispiel weist der Griffabschnitt 36 entlang seiner Erstreckung in Z-Richtung eine im Wesentlichen gleichmäßig gekrümmte Gestaltung mit einem Krümmungsradius r₁ von ungefähr 220 mm auf. Vorzugsweise erstreckt sich die Krümmung kontinuierlich über den gesamten Griffabschnitt 36 zwischen Öffnungsabschnitt 38 und Schwenkpunkt 14 des Schließhebels 16. Damit entspricht die Krümmung des Griffabschnitts 36 der durchschnittlichen Innenkontur einer in Greifposition gehaltenen menschlichen Hand, insbesondere wenn die mittleren Fingerglieder der Hand in etwa in Y-Richtung verlaufend an dem Griffabschnitt 36 anliegen. Somit ist eine besonders effektive Kraftübertragung und eine bequeme Betätigung des Karabiners 10 möglich.

Am Übergang vom Griffabschnitt 36 zum Öffnungsabschnitt 38 ist eine Fingerbarriere 40 in Form einer vom Griffabschnitt 36 zum Öffnungsabschnitt 38 hin ansteigenden Stufe vorgesehen, welche dafür ausgelegt ist, ein Abgleiten oder Abrutschen der am Griffabschnitt 36 gehaltenen Finger nach oben auf den Öffnungsabschnitt 38 bzw. zum Innenbereich 24 des Karabiners 10 hin zu verhindern. Die Kontur der Fingerbarriere 40 ist insbesondere in etwa an die Form bzw. Dicke eines menschlichen Fingers angepasst, um den Finger zuverlässig zurückhalten zu können. Insbesondere ist die Stufe der Fingerbarriere 40 vorzugsweise auch so geformt bzw. von solcher Höhe, dass der Finger des Bergsteigers auch dann zuverlässig zurückgehalten wird, wenn der Schließhebel 16 teilweise oder vollständig in die geöffnete Stellung verschwenkt ist.

Während in der geschlossenen Stellung die Öffnung 21 des Hauptbügels 12 durch den Öffnungsabschnitt 38 des Schließhebels 16 verschlossen ist, ist der Schließhebel 16 in der geöffneten Stellung nach innen soweit weggeschwenkt, dass die Öffnung 21 geöffnet ist. Die Öffnung 21 ist dann einerseits durch das freie Ende 30 des Hauptbügels 12 und andererseits durch den Öffnungsabschnitt 38 bzw. die Fingerbarriere 40 begrenzt (Figuren 4 und 6). Die Finger des Bergsteigers liegen hinter der Fingerbarriere 40, d.h. auf der anderen Seite der Fingerbarriere 40 als die Öffnung 21. Mit anderen Worten ist die Fingerbarriere 40 zwischen den Fingern des Benutzers und der Öffnung 21 des Hauptbügels bzw. zwischen den Fingern des Benutzers und dem Innenbereich 24 des Karabiners angeordnet. Die Finger des Benutzers können somit vor mechanischer Kollision mit dem ein- oder auskoppelnden Sicherungsmittel geschützt oder abgeschirmt werden.

Die Fingerbarriere 40 ist vorzugsweise als Stufe ausgebildet, sodass die Überwindung der Fingerbarriere nur in einer Richtung, d.h. vom Griffabschnitt 36 zum Öffnungsabschnitt 38 hin, gehemmt wird, während jedoch ein Abgleiten vom Öffnungsabschnitt 38 über die Fingerbarriere 40 hinweg in Richtung des Griffabschnitts 36 ohne Behinderung möglich ist. Dies hat zum Einen den Vorteil, dass das Auffinden der richtigen Griffposition für die Finger, nämlich am Griffabschnitt 36, erleichtert wird. Zum Anderen wird durch diese Konfiguration erreicht, dass in der geöffneten Stellung des Karabiners eine Begrenzung 22 des Innenbereichs 24 des Karabiners 10 eine Ausweisungskontur 42 aufweist, welche ein eingekoppeltes Sicherungsmittel (nicht gezeigt) aus dem Innenbereich 24 über die Fingerbarriere 40 hinweg durch die Öffnung 21 des Karabiners 10 ausweist. Damit kann erreicht werden, dass beim Auskoppeln des Sicherungsmittels das Sicherungsmittel ohne zu Verhaken aus dem Innenbereich 24 entlang der Ausweisungskontur 42, d.h. entlang des Öffnungsabschnitts 38, aus dem Karabiner 10 austreten kann, und dabei gleichzeitig durch die Fingerbarriere 40 über die Finger des Benutzers hinweg geführt wird, sodass es leicht auskoppelt, ohne mit den Fingern des Benutzers zu kollidieren.

Der Sicherungshebel 20 ist in der Hauptebene E des Klettersteigkarabiners 10 verschwenkbar gelagert zwischen einer in Figuren 1 bis 3 gezeigten Sicherungsstellung und einer in Figuren 4 bis 6 gezeigten Freigabestellung. Die Drehachse des Schwenkpunkts 18 des Sicherungshebels 20 verläuft im Wesentlichen parallel zur Drehachse des Schwenkpunkts 14 des Schließhebels 16 in Y-Richtung, die Schwenkpunkte 14, 18 liegen jedoch auf gegenüberliegenden Seiten der Hauptzugachse H. Von dem Schwenkpunkt 18 aus erstreckt sich der Sicherungshebel 20 im Wesentlichen nach oben, wobei an seiner Außenseite ein Griffabschnitt 44 gebildet ist. Der Griffabschnitt 44 des Sicherungshebels 20 ist vom Griffabschnitt 36 des Schließhebels 16 abgewandt.

Der Sicherungshebel 20 steht über eine Verriegelungsanordnung 46 in Verbindung mit dem Schließhebel 16. Die Verriegelungsanordnung 46 ist dafür eingerichtet, den Schließhebel 16 in seiner geschlossenen Stellung zu sichern oder zu verriegeln, so dass der Schließhebel ohne vorherige Entsicherung durch den Sicherungshebel 20 nicht in die geöffnete Stellung verschwenkt werden kann. Im Ausführungsbeispiel umfasst die Verriegelungsanordnung 46 eine Kulisse 48 und einen in der Kulisse 48 geführten Kulissenfolger 50, wobei eines der beiden Elemente aus Kulisse 48 und Kulissenfolger 50 an einem der beiden Bauteile aus Sicherungshebel 20 und Schließhebel 16 angeordnet ist und das andere der beiden Elemente am jeweils anderem Bauteil angeordnet ist. Im gezeigten Ausführungsbeispiel ist die Kulisse 48 am Sicherungshebel 20 ausgebildet und weist L-förmige Form mit einem ersten Kulissenabschnitt 48a und einem sich in einem Winkel daran anschließenden zweiten Kulissenabschnitt 48b auf, während der Kulissenfolger 50 am Schließhebel 16 befestigt ist. Ist der Schließhebel 16 aus zwei parallelen Platten 16a, 16b aufgebaut, so kann der Kulissenfolger 50 gleichzeitig einen Befestigungssteg oder Stabilisierungssteg bilden, welcher die Platten 16a, 16b zueinander parallel hält und eine entsprechende Aussparung des Hauptbügels durchsetzt.

Während der Schwenkbewegung des Schließhebels 16 von der geschlossenen Stellung in die geöffnete Stellung bewegt sich der Kulissenfolger 50 in dem zweiten Kulissenabschnitt 48b, welcher eine dem Schwenkweg entsprechende Krümmung aufweist. Befindet sich der Schließhebel 16 jedoch in der geschlossenen Stellung, so kann der Kulissenfolger 50 in den ersten Kulissenabschnitt 48a eintreten. Eine Sicherungsfeder (nicht gezeigt), welche den Sicherungshebel 20 in seine Sicherungsstellung vorspannt, übt in der geschlossenen Stellung eine solche Kraft auf die Verriegelungsanordnung 46 aus, dass der Kulissenfolger 50 von dem zweiten Kulissenabschnitt 48b weggedrückt und in den ersten Kulissenabschnitt 48a hineingedrückt wird. Dieser Zustand ist die Sicherungsstellung des Sicherungshebels 20, in welcher der Sicherungshebel 20 von der Hauptzugachse H weg verschwenkt ist (Figuren 1 und 3). In der Sicherungsstellung des Sicherungshebels 20 wird der Kulissenfolger 50 daran gehindert, in den zweiten Kulissenabschnitt 48b einzutreten, so dass der Schließhebel 16 daran gehindert wird, in die geöffnete Stellung zu verschwenken und der Karabiner 10 somit gesichert ist.

Zum Entsichern des Schließhebels wird der Sicherungshebel 20 von der Hand des Bergsteigers entgegen der Kraft der Sicherungsfeder zur Hauptzugachse H hin verschwenkt, so dass der Kulissenfolger 50 entlang des ersten Kulissenabschnitts 48a verschoben wird, bis er in den zweiten Kulissenabschnitt 48b eintreten kann. Der Kulissenfolger 50 kann sich dann entlang des zweiten Kulissenabschnitts 48b verschieben (Entsicherungsstellung des Sicherungshebels 20), so dass sich der Schließhebel 16 öffnen lässt.

Auch der Griffabschnitt 44 des Sicherungshebels 20 weist eine vorzugsweise durchgehend konvex gekrümmte Form entlang seiner Erstreckung in Z-Richtung auf. Ein Krümmungsradius r₂ der Krümmung des Griffabschnitts 44 liegt vorzugsweise zwischen ungefähr 180 mm und ungefähr 260 mm, sodass die Krümmung gut an die Anatomie der menschlichen Hand angepasst ist und optimale Krafteinleitung sowie bequeme Handhabung des Karabiners erreicht werden kann.

Ferner sind die Schwenkpunkte 14, 18 des Schließhebels 16 bzw. des Sicherungshebels 20 in Bezug auf die Hauptachse H unterhalb der Gurtöffnung 34 angeordnet, d.h. die Gurtöffnung 34 liegt in Bezug auf die Hauptzugachse H zwischen den Schwenkpunkten 14, 18 und dem Innenbereich 24 des Karabiners 10. Durch diese Maßnahme kann die Länge des Schließhebels 16 vom Schwenkpunkt 14 bis zum freien Ende 28 vergrößert werden, ohne die Gesamtabmessung des Karabiners in Z-Richtung übermäßig zu vergrößern, da sich in dieser Anordnung der Schließhebel über einen großen Teil der Gesamtabmessung des Karabiners 10 in Z-Richtung erstreckt.

In Figuren 1 und 3 ist ferner zu erkennen, dass der Karabiner 10 in der geschlossenen Stellung im Bereich der Griffabschnitte 36, 44 des Schließhebels 16 bzw. des Sicherungshebels 20 eine leichte V-Form aufweist. Das heißt, dass ein ungefähr in X-Richtung gemessener Abstand l₃ zwischen den Griffabschnitten 36, 44 im Bereich der Schwenkpunkte 14, 18 kleiner ist als ein Abstand l₄ zwischen den Griffabschnitten 36, 44 in einem Bereich nahe der Fingerbarriere 40 bzw. nahe dem oberen Ende des Sicherungshebels 20. Vorzugsweise ist der Karabiner 10 jedoch an seiner schmalsten Stelle (l₃) noch breiter als ungefähr 35 mm und ist an seiner breitesten Stelle (l₄) noch schmaler als ungefähr 70 mm, sodass die Abmessungen des Karabiners 10 der Griffweite des Großteils der Bevölkerung Rechnung trägt. Im Ausführungsbeispiel beträgt l₃ ungefähr 45 mm und l₄ beträgt ungefähr 60 mm. Für diese Werte haben ergonomische Untersuchungen eine besonders effektive Kraftübertragung und eine besonders komfortable Handhabung des Karabiners ergeben.

## Patentansprüche

1. Karabiner (10), welcher einen Hauptbügel (12) und einen schwenkbar zu diesem gehaltenen Schließhebel (16) umfasst, wobei der Schließhebel in einer geschlossenen Stellung des Karabiners eine Öffnung (21) des Hauptbügels schließt und in einer geöffneten Stellung des Karabiners zu einem Innenbereich (24) des Karabiners hin verschwenkt ist, um die Öffnung (21) des Hauptbügels zu öffnen,
wobei eine Gurtöffnung (34) zur Aufnahme eines Gurts separat von dem Innenbereich (24) des Karabiners ausgebildet ist, und
wobei in Richtung einer Hauptzugachse (H) des Karabiners die Gurtöffnung (34) zwischen dem Schwenkpunkt (14) des Schließhebels (16) und dem Innenbereich (24) des Karabiners oder an gleicher axialer Position wie der Schwenkpunkt (14) des Schließhebels (16) angeordnet ist,
**dadurch gekennzeichnet,**
**dass** eine Länge (l₁) des Schließhebels (16) größer ist als 85 mm, bevorzugt größer ist als 100 mm,
**dass** der Schließhebel (16) in Richtung der Hauptzugachse (H) zwischen dem Schwenkpunkt (14) und einem freien Ende (28) des Schließhebels (16) in einen unteren Abschnitt, der einen Griffabschnitt (36) bildet, und einen oberen Abschnitt, der einen Öffnungsabschnitt (38) bildet, unterteilt ist, und
**dass** in Richtung der Hauptzugachse (H) der Griffabschnitt (36) zwischen dem Öffnungsabschnitt (38) und dem Schwenkpunkt (14) liegt und der Öffnungsabschnitt (38) zwischen dem freien Ende (28) des Schließhebels (16) und dem Griffabschnitt (36) liegt.

2. Karabiner (10) nach Anspruch 1,
**dadurch gekennzeichnet, dass** der Schließhebel (16) einen Griffabschnitt (36) für mindestens einen Finger eines Benutzers aufweist, wobei eine Länge des Griffabschnitts (36) größer ist als 30 mm, vorzugsweise größer ist als 45 mm, besonders bevorzugt größer ist als 50 mm.

3. Karabiner (10) nach Anspruch 1 oder Anspruch 2,
**dadurch gekennzeichnet, dass** der Schließhebel (16) einen ersten Griffabschnitt (36) aufweist und der Karabiner (10) einen von dem ersten Griffabschnitt (36) abgewandten zweiten Griffabschnitt (44) aufweist, so dass zum Öffnen des Karabiners (10) der erste und der zweite Griffabschnitt im Wesentlichen aufeinander zu bewegbar sind,
wobei ein Abstand zwischen dem ersten Griffabschnitt (36) und dem zweiten Griffabschnitt (44) zwischen 35 mm und 70 mm, vorzugsweise zwischen 40 mm und 60 mm, liegt.

4. Karabiner (10) nach einem der vorhergehenden Ansprüche,
**dadurch gekennzeichnet, dass** der Schließhebel (16) einen ersten Griffabschnitt (36) aufweist und der Karabiner (10) einen von dem ersten Griffabschnitt (36) abgewandten zweiten Griffabschnitt (44) aufweist, so dass zum Öffnen des Karabiners (10) der erste und der zweite Griffabschnitt im Wesentlichen aufeinander zu bewegbar sind,
wobei der erste Griffabschnitt (36) oder/und der zweite Griffabschnitt (44) entlang seiner Längserstreckung eine Krümmung mit einem Krümmungsradius (r₁, r₂) zwischen 180 mm und 260 mm, vorzugsweise zwischen 210 mm und 230 mm aufweist.

5. Karabiner (10) nach einem der vorhergehenden Ansprüche,
**dadurch gekennzeichnet, dass** der Schließhebel (16) eine Fingerbarriere (40) aufweist, welche dafür ausgelegt ist, ein Abgleiten des Fingers zu einem freien Ende des Schließhebels (16) hin zu verhindern.

6. Karabiner (10) nach Anspruch 5,
**dadurch gekennzeichnet, dass** in der geöffneten Stellung des Karabiners (10) eine Begrenzung (22) des Innenbereichs (24) des Karabiners (10) eine Ausweisungskontur (42) aufweist, welche ein Sicherungsmittel aus dem Innenbereich (24) über die Fingerbarriere (40) hinweg durch die Öffnung (21) des Karabiners ausweist.

7. Karabiner (10) nach Anspruch 5 oder 6,
**dadurch gekennzeichnet, dass** die Fingerbarriere (40) durch einen Vorsprung oder eine Stufe gebildet ist, welcher/welche kontinuierlich in die Ausweisungskontur (42) übergeht.

8. Karabiner (10) nach einem der vorhergehenden Ansprüche,
**gekennzeichnet durch** einen Sicherungshebel (20), welcher schwenkbar zum Hauptbügel (12) gehalten ist, wobei der Sicherungshebel an einem Schwenkpunkt (18) verschwenkbar ist zwischen einer Sicherungsstellung, in der er eine Schwenkbewegung des Schließhebels (16) von der geschlossenen Stellung in die geöffnete Stellung blockiert, und einer Freigabestellung, in der er eine Schwenkbewegung des Schließhebels (16) von der geschlossenen Stellung in die geöffnete Stellung zulässt,
wobei in Richtung der Hauptzugachse (H) des Karabiners die Gurtöffnung (34) zwischen dem Schwenkpunkt (18) des Sicherungshebels (20) und dem Innenbereich (24) des Karabiners oder an gleicher axialer Position wie der Schwenkpunkt (18) des Sicherungshebels (20) angeordnet ist.

9. Karabiner (10) nach einem der vorhergehenden Ansprüche,
**gekennzeichnet durch** einen Sicherungshebel (20), welcher an einem Schwenkpunkt (18) schwenkbar zum Hauptbügel (12) gehalten ist, wobei der Sicherungshebel (20) verschwenkbar ist zwischen einer Sicherungsstellung, in der er eine Schwenkbewegung des Schließhebels (16) von der geschlossenen Stellung in die geöffnete Stellung blockiert, und einer Freigabestellung, in der er eine Schwenkbewegung des Schließhebels (16) von der geschlossenen Stellung in die geöffnete Stellung zulässt,
wobei in Richtung der Hauptzugachse (H) des Karabiners die Gurtöffnung (34) zwischen den Schwenkpunkten (14, 18) des Schließhebels (16) und des Sicherungshebels (20) und dem Innenbereich (24) des Karabiners angeordnet ist.

10. Karabiner (10) nach einem der vorhergehenden Ansprüche,
**dadurch gekennzeichnet, dass** der Karabiner ein Klettersteigkarabiner ist.

## Claims

1. Carabiner (10) which comprises a main crook (12) and a closing lever (16) supported so as to be pivotable with respect to said crook, the closing lever closing an opening (21) in the main crook in a closed position of the carabiner and pivoting towards an inner region (24) of the carabiner in an open position of the carabiner in order to open the opening (21) in the main crook,
a harness opening (34) being formed for accommodating a harness separately from the inner region (24) of the carabiner, and
the harness opening (34) being arranged, in the direction of a main tensile axis (H) of the carabiner, between the pivot point (14) of the closing lever (16) and the inner region (24) of the carabiner or at the same axial position as the pivot point (14) of the closing lever (16),
**characterised**
**in that** a length (l₁) of the closing lever (16) is greater than 85 mm, preferably greater than 100 mm,
**in that** the closing lever (16), in the direction of the main tensile axis (H), between the pivot point (14) and a free end (28) of the closing lever (16), is divided into a lower portion which forms a grip portion (36) and an upper portion which forms an opening portion (38), and
**in that** in the direction of the main tensile axis (H), the grip portion (36) is between the opening portion (38) and the pivot point (14) and the opening portion (38) is between the free end (28) of the closing lever (16) and the grip portion (36).

2. Carabiner (10) according to claim 1,
**characterised in that** the closing lever (16) comprises a grip portion (36) for at least one finger of a user, a length of the grip portion (36) being greater than 30 mm, preferably greater than 45 mm, particularly preferably greater than 50 mm.

3. Carabiner (10) according to either claim 1 or claim 2,
**characterised in that** the closing lever (16) comprises a first grip portion (36) and the carabiner (10) comprises a second grip portion (44) that is remote from the first grip portion (36) such that the first and second grip portions can be moved substantially with respect to one another in order to open the carabiner (10),
a distance between the first grip portion (36) and the second grip portion (44) being between 35 mm and 70 mm, preferably between 40 mm and 60 mm.

4. Carabiner (10) according to any of the preceding claims,
**characterised in that** the closing lever (16) comprises a first grip portion (36) and the carabiner (10) comprises a second grip portion (44) that is remote from the first grip portion (36), such that the first and second grip portions can be moved substantially with respect to one another in order to open the carabiner (10),
the first grip portion (36) and/or the second grip portion (44) having, along the longitudinal extent thereof, a curvature with a radius of curvature (r₁, r₂) of between 180 mm and 260 mm, preferably between 210 mm and 230 mm.

5. Carabiner (10) according to any of the preceding claims,
**characterised in that** the closing lever (16) comprises a finger barrier (40) which is designed to prevent the finger from sliding towards a free end of the closing lever (16).

6. Carabiner (10) according to claim 5,
**characterised in that**, in the opened position of the carabiner (10), a boundary (22) of the inner region (24) of the carabiner (10) comprises a guide contour (42) which guides a securing means out of the inner region (24) over the finger barrier (40) through the opening (21) in the carabiner.

7. Carabiner (10) according to either claim 5 or claim 6,
**characterised in that** the finger barrier (40) is formed by a projection or a step which transitions continuously into the guide contour (42).

8. Carabiner (10) according to any of the preceding claims,
**characterised by** a securing lever (20) which is supported so as to be pivotable with respect to the main crook (12), the securing lever being pivotable at a pivot point (18) between a secure position, in which said lever blocks a pivoting movement of the closing lever (16) from the closed position into the opened position, and a release position, in which said lever permits a pivoting movement of the closing lever (16) from the closed position into the opened position, the harness opening (34) being arranged, in the direction of the main tensile axis (H) of the carabiner, between the pivot point (18) of the securing lever (20) and the inner region (24) of the carabiner or at the same axial position as the pivot point (18) of the securing lever (20).

9. Carabiner (10) according to any of the preceding claims,
**characterised by** a securing lever (20) which is supported at a pivot point (18) so as to be pivotable with respect to the main crook (12), the securing lever (20) being pivotable between a secure position, in which said lever blocks a pivoting movement of the closing lever (16) from the closed position into the opened position, and a release position, in which said lever permits a pivoting movement of the closing lever (16) from the closed position into the opened position, the harness opening (34) being arranged, in the direction of the main tensile axis (H) of the carabiner, between the pivot points (14, 18) of the closing lever (16) and the securing lever (20) and the inner region (24) of the carabiner.

10. Carabiner (10) according to any of the preceding claims,
**characterised in that** the carabiner is a climbing carabiner.

## Revendications

1. Mousqueton (10), lequel comprend un étrier principal (12) et un levier de fermeture (16) maintenu de façon pivotante sur celui-ci, dans lequel le levier de fermeture, dans une position fermée du mousqueton, ferme une ouverture (21) de l'étrier principal et, dans une position ouverte du mousqueton, pivote vers une zone interne (24) du mousqueton, pour ouvrir l'ouverture (21) de l'étrier principal, dans lequel est conçue une ouverture de ceinture (34) séparément de la zone interne (24) du mousqueton pour le logement d'une ceinture, et dans lequel dans le sens d'un axe de traction principal (H) du mousqueton, l'ouverture de ceinture (34) est disposée entre le point de pivotement (14) du levier de fermeture (16) et la zone interne (24) du mousqueton ou à la position axiale du point de pivotement (14) du levier de fermeture (16), **caractérisé en ce qu'**une longueur (l₁) du levier de fermeture (16) est supérieure à 85 mm, de préférence supérieure à 100 mm, **en ce que** le levier de fermeture (16) dans le sens de l'axe de traction principal (H) est divisé entre le point de pivotement (14) et une extrémité libre (28) du levier de fermeture (16) en une section inférieure, qui forme une section de préhension (36), et une section supérieure, qui forme une section d'ouverture (38), et **en ce que** dans le sens de l'axe de traction principal (H), la section de préhension (36) se trouve entre la section d'ouverture (38) et le point de pivotement (14) et la section d'ouverture (38) se trouve entre l'extrémité libre (28) du levier de fermeture (16) et la section de préhension (36).

2. Mousqueton (10) selon la revendication 1, **caractérisé en ce que** le levier de fermeture (16) présente une section de préhension (36) pour au moins un doigt d'un utilisateur, dans lequel une longueur de la section de préhension (36) est supérieure à 30 mm, de préférence supérieure à 45 mm, de préférence particulière supérieure à 50 mm.

3. Mousqueton (10) selon la revendication 1 ou la revendication 2, **caractérisé en ce que** le levier de fermeture (16) présente une première section de préhension (36) et le mousqueton (10) présente une deuxième section de préhension (44) opposée à la première section de préhension (36), de sorte que pour ouvrir le mousqueton (10), la première et la deuxième section de préhension doivent être déplaçables essentiellement l'une sur l'autre, dans lequel un écart existe entre la première section de préhension (36) et la deuxième section de préhension (44) entre 35 mm et 70 mm, de préférence entre 40 mm et 60 mm.

4. Mousqueton (10) selon l'une des revendications précédentes, **caractérisé en ce que** le levier de fermeture (16) présente une première section de préhension (36) et le mousqueton (10) présente une deuxième section de préhension (44) opposée à la première section de préhension (36), de sorte que pour ouvrir le mousqueton (10), la première et la deuxième section de préhension doivent être déplacées essentiellement l'une sur l'autre, dans lequel la première section de préhension (36) ou / et la deuxième section de préhension (44) présente, le long de son extension longitudinale, une courbure avec un rayon de courbure (r₁, r₂) entre 180 mm et 260 mm, de préférence entre 210 mm et 230 mm.

5. Mousqueton (10) selon l'une des revendications précédentes, **caractérisé en ce que** le levier de fermeture (16) présente une barrière de doigt (40), laquelle est conçue pour empêcher un glissement du doigt vers une extrémité libre du levier de fermeture (16).

6. Mousqueton (10) selon la revendication 5, **caractérisé en ce que** dans la position ouverte du mousqueton (10), une limite (22) de la zone interne (24) du mousqueton (10) présente un profil d'expulsion (42), lequel expulse un moyen de sécurité de la zone interne (24) par-dessus la barrière de doigt (40) à travers l'ouverture (21) du mousqueton.

7. Mousqueton (10) selon la revendication 5 ou 6, **caractérisé en ce que** la barrière de doigt (40) est formée par une partie en saillie ou un gradin, lequel passe en continu dans le profil d'expulsion (42).

8. Mousqueton (10) selon l'une des revendications précédentes, **caractérisé par** un levier de sécurité (20), lequel est maintenu de façon pivotante par rapport à l'étrier principal (12), dans lequel le levier de sécurité peut pivoter à un point de pivotement (18) entre une position de sécurité, dans laquelle il bloque un mouvement de pivotement du levier de fermeture (16) de la position fermée à la position ouverte, et une position de dégagement, dans laquelle il permet un mouvement de pivotement du levier de fermeture (16) de la position fermée à la position ouverte, dans lequel, dans le sens de l'axe de traction principal (H) du mousqueton, l'ouverture de ceinture (34) est disposée entre le point de pivotement (18) du levier de sécurité (20) et la zone interne (24) du mousqueton ou à la position axiale du point de pivotement (18) du levier de sécurité (20).

9. Mousqueton (10) selon l'une des revendications précédentes, **caractérisé par** un levier de sécurité (20), lequel est maintenu à un point de pivotement (18) de façon pivotante par rapport à l'étrier principal (12), dans lequel le levier de sécurité (20) peut pivoter entre une position de sécurité, dans laquelle il bloque un mouvement de pivotement du levier de fermeture (16) de la position fermée à la position ouverte, et une position de dégagement, dans laquelle il permet un mouvement de pivotement du levier de fermeture (16) de la position fermée à la position ouverte, dans lequel dans le sens de l'axe de traction principal (H) du mousqueton, l'ouverture de ceinture (34) est disposée entre les points de pivotement (14, 18) du levier de fermeture (16) et du levier de sécurité (20) et la zone interne (24) du mousqueton.

10. Mousqueton (10) selon l'une des revendications précédentes, **caractérisé en ce que** le mousqueton est un mousqueton de via ferrata.
